# EUROPÄISCHE PATENTSCHRIFT

(11) **EP 3 433 925 B1**
(45) Veröffentlichungstag und Bekanntmachung des Hinweises auf die Patenterteilung: **09.12.2020**
(21) Anmeldenummer: 17707827.6
(22) Anmeldetag: 27.02.2017
(51) Int. Cl.: H02M 3/24, B60L 1/00, H02M 1/00

(54) **GLEICHSPANNUNGS-KONVERTER UND VERFAHREN ZUR REGELUNG EINES GLEICHSPANNUNGS-KONVERTERS**
DC-DC VOLTAGE CONVERTER AND METHOD FOR REGULATING A DC-DC VOLTAGE CONVERTER
CONVERTISSEUR DE TENSION CONTINUE ET PROCÉDÉ DE RÉGULATION D'UN CONVERTISSEUR DE TENSION CONTINUE

(30) Priorität: 24.03.2016 DE 102016205037
(43) Veröffentlichungstag der Anmeldung: 30.01.2019
(73) Patentinhaber: Robert Bosch GmbH, 70442 Stuttgart (DE)
(72) Erfinder: ESTEGHLAL, Gholamabas, 70499 Stuttgart-Weilimdorf (DE)
(86) Internationale Anmeldenummer: PCT/EP2017/054487
(87) Internationale Veröffentlichungsnummer: WO 2017/162408

(56) Entgegenhaltungen:
- EP-A2- 1 847 007
- DE-A1-102013 107 792
- US-A1- 2013 051 084
- US-A1- 2013 051 084
- US-A1- 2015 092 462
- Anonymous: "Convertisseur Flyback - Wikipédia", , 15. November 2014 (2014-11-15), XP055370629, Wikipedia Gefunden im Internet: URL:https://fr.wikipedia.org/w/index.php?t itle=Convertisseur_Flyback&oldid=109137577 #Tension [gefunden am 2017-05-09]
- Joachim Deutscher: "Regelung mit mehreren Freiheitsgraden", , 10. Januar 2012 (2012-01-10), Seiten 1-1, XP055370778, http://rd.springer.com/chapter/10.1007%2F9 78-3-642-19559-4_3 Gefunden im Internet: URL:https://static-content.springer.com/lo okinside/chp:10.1007/978-3-642-19559-4_3/0 01.png [gefunden am 2017-05-09]
- Anonymous: "Convertisseur Flyback - Wikip?dia", , 15 November 2014 (2014-11-15), XP055370629, Wikipedia Retrieved from the Internet: URL:https://fr.wikipedia.org/w/index.php?t itle=Convertisseur_Flyback&oldid=109137577 #Tension [retrieved on 2017-05-09]
- Joachim Deutscher: "Regelung mit mehreren Freiheitsgraden", , 10 January 2012 (2012-01-10), pages 1-1, XP055370778, http://rd.springer.com/chapter/10.1007%2F9 78-3-642-19559-4_3 Retrieved from the Internet: URL:https://static-content.springer.com/lo okinside/chp:10.1007/978-3-642-19559-4_3/0 01.png [retrieved on 2017-05-09]

## Beschreibung

Die vorliegende Erfindung betrifft einen Gleichspannungs-Konverter sowie ein Verfahren zur Regelung eines Gleichspannungs-Konverters. Insbesondere betrifft die vorliegende Erfindung einen Gleichspannungs-Konverter zur Konvertierung einer Eingangs-Gleichspannung in eine vorbestimmte Ausgangs-Gleichspannung.

### Stand der Technik

Bei Elektro- oder Hybridfahrzeugen kann die Versorgung eines Niedervolt-Bordnetzes durch ein Hochvoltnetz des Fahrzeugs gewährleistet werden. Das Hochvoltnetz des Fahrzeugs wird dabei insbesondere für die Versorgung des elektrischen Antriebs eingesetzt. Um durch das Hochvoltnetz elektrische Energie in das Niedervolt-Bordnetz eines Elektro- oder Hybridfahrzeuges einzuspeisen, kann beispielsweise ein Gleichspannungs-Wandler verwendet werden. Derartige Gleichspannungs-Wandler können elektrische Energie aus dem Hochvoltnetz entnehmen und die Spannung des Hochvoltnetzes in eine entsprechende Bordnetzspannung umwandeln.

Die Druckschrift DE 10 2011 083 010 A1 offenbart eine Steuervorrichtung für einen Gleichspannungs-Wandler sowie ein Verfahren zum Betreiben eines Gleichspannungswandlers für die Spannungsversorgung eines Bordnetzes eines Hybridfahrzeuges aus einem Hochspannungsnetz. Hierzu ist eine Spannungsregeleinrichtung vorgesehen, welche als Regelgröße die Ausgangsspannung des Gleichspannungswandlers regelt. Ferner ist eine Stromregeleinrichtung vorgesehen, die als Regelgröße den Ausgangsstrom des Gleichspannungswandlers regelt.

### Offenbarung der Erfindung

Die vorliegende Erfindung offenbart einen Gleichspannungs-Konverter zur Konvertierung einer Eingangs-Gleichspannung in eine vorbestimmte Ausgangs-Gleichspannung, sowie ein Verfahren zur Regelung eines Gleichspannungs-Konverters mit den Merkmalen der unabhängigen Patentansprüche.

### Demgemäß ist vorgesehen:

Gemäß eines ersten Aspekts ist ein Gleichspannungs-Konverter zur Konvertierung einer Eingangs-Gleichspannung in eine vorbestimmte Ausgangs-Gleichspannung vorgesehen. Der Gleichspannungs-Konverter umfasst eine Vergleichseinrichtung, eine Korrektureinrichtung, eine Regeleinrichtung, eine Recheneinrichtung und einen Gleichspannungswandler. Die Vergleichseinrichtung ist dazu ausgelegt, basierend auf einem Vergleich des Werts der Ausgangs-Gleichspannung des Gleichspannungs-Konverters mit einem vorgegebenen Soll-Spannungswert für die Ausgangs-Gleichspannung eine Regelgröße bereitzustellen. Die Korrektureinrichtung ist dazu ausgelegt, einen Wert der Eingangs-Gleichspannung des Gleichspannungs-Konverters basierend auf einer zuvor bestimmten Korrekturfunktion anzupassen, und den Wert der angepassten Eingangs-Gleichspannung auszugeben. Die Regeleinrichtung ist dazu ausgelegt, unter Verwendung der angepassten Eingangs-Gleichspannung und dem vorgegebenen Soll-Spannungswert für die Ausgangs-Gleichspannung eine weitere Regelgröße zu berechnen. Die Recheneinrichtung ist dazu ausgelegt, aus der Regelgröße der Vergleichseinrichtung und der weiteren Regelgröße der Regeleinrichtung einen Reglerwert zu berechnen. Der Gleichspannungs-Wandler ist dazu ausgelegt, unter Verwendung des von der Recheneinrichtung berechneten Reglerwerts die Eingangs-Gleichspannung in die Ausgangs-Gleichspannung zu konvertieren.

Gemäß eines weiteren Aspekts ist ein Verfahren zur Regelung eines Gleichspannungs-Konverters vorgesehen. Das Verfahren umfasst die Schritte des Ermittelns einer Regelgröße basierend auf einem Vergleich des Werts einer Ausgangs-Gleichspannung des Gleichspannungs-Konverters mit einem vorgegebenen Soll-Spannungswert für die Ausgangs-Gleichspannung; des Anpassens eines Werts einer Eingangs-Gleichspannung des Gleichspannungs-Konverters basierend auf einer zuvor bestimmten Korrekturfunktion; des Berechnens einer weiteren Regelgröße unter Verwendung des Werts der angepassten Eingangs-Gleichspannung und dem vorgegebenen Soll-Spannungswert für die Ausgangs-Gleichspannung; des Kombinierens der ermittelten Regelgröße und der berechneten weiteren Regelgröße zu einem Reglerwert; und des Steuerns der Ausgangsspannung eines Gleichspannungswandlers basierend auf dem Reglerwert.

### Vorteile der Erfindung

Der vorliegenden Erfindung liegt die Erkenntnis zugrunde, dass eine Regelung, wie beispielsweise die Spannungsregelung eines Gleichspannungswandlers, besonders schnell und effizient durchgeführt werden kann, wenn der entsprechende Regler nur eine geringe Reglerabweichung auszuregeln hat.

Es ist daher eine Idee der vorliegenden Erfindung, dieser Erkenntnis Rechnung zu tragen und für die Spannungsregelung der Ausgangsspannung eines Gleichspannungswandlers eine Vorsteuerung vorzusehen, die adaptiv an die Eingangsspannung des Gleichspannungswandlers anpassbar ist. Durch das adaptive Anpassen der Regelgröße der Vorsteuerung an die Eingangsspannung ist es somit für den eigentlichen Spannungsregler nur erforderlich, die verbleibenden, geringen Spannungsschwankungen am Ausgang des Gleichspannungswandlers auszuregeln.

Die adaptive Anpassung der Vorsteuerung führt dabei zu einer relativ geringen Reglerabweichung bei einem Arbeitspunktwechsel. Hierdurch kann das dynamische Verhalten der Spannungsregelung des Gleichspannungs-Konverters verbessert werden.

Gemäß einer Ausführungsform ist die Korrektureinrichtung dazu ausgelegt, die Korrekturfunktion für das Anpassen des Werts der Eingangs-Gleichspannung unter Verwendung der durch die Vergleichseinrichtung ermittelten Regelgröße und des Werts der Eingangs-Gleichspannung zu berechnen. Wird, insbesondere bei einem stationären Betrieb, anhand der Regelgröße detektiert, dass die Regelgröße der Vergleichseinrichtung im stationären Betrieb in die Regelung eingreifen muss, um die gewünschte Ausgangsspannung am Ausgang des Gleichspannungswandlers zu erzielen, so ist dies ein Indiz darauf, dass die Vorsteuerung und insbesondere die Berücksichtigung der aktuellen Eingangsspannung des Gleichspannungs-Konverters nicht optimal eingestellt ist. Durch Adaption der Korrekturfunktion für das Anpassen des Werts der Eingangs-Gleichspannung kann eine Vorsteuerung daraufhin so angepasst werden, dass im stationären Betrieb möglichst kein oder nur ein sehr geringes Eingreifen durch die Regelgröße der Vergleichseinrichtung erforderlich ist.

Gemäß einer Ausführungsform ist die Korrektureinrichtung dazu ausgelegt, die Korrekturfunktion dann anzupassen, wenn eine vorgegebene Freigabebedingung erfüllt ist. Eine solche Freigabebedingung kann beispielsweise Parameter, wie zum Beispiel den Betriebsmodus des Gleichspannungswandlers, einen Wertebereich für den Eingangsstrom in den Gleichspannungswandler, eine Auswertung einer Zwischenkreisspannung in dem Gleichspannungswandler, eine Auswertung der Ausgangs-Gleichspannung des Gleichspannungswandlers und/oder einen Vergleich der Regelgröße der Vergleichseinrichtung mit einem vorgegebenen Schwellwert umfassen. Die zuvor genannten Parameter können untereinander, sowie gegebenenfalls mit weiteren Parametern verknüpft werden, um daraus eine Freigabebedingung für das Anpassen der Korrekturfunktion zu initiieren.

Gemäß einer Ausführungsform umfasst der Gleichspannungs-Wandler einen Transformator. Dabei kann die Regeleinrichtung dazu ausgelegt sein, den Korrekturwert unter Verwendung des Übertragungsverhältnisses des Transformators zu berechnen. Durch die Berücksichtigung des Übertragungsverhältnisses des Transformators in dem Gleichspannungs-Wandler kann aus den Spannungsverhältnissen auf der Eingangsseite des Gleichspannungs-Konverters auf die Spannungsverhältnisse auf der Ausgangsseite geschlossen werden.

Gemäß einer Ausführungsform des Verfahrens zur Regelung eines Gleichspannungs-Konverters wird die Korrekturfunktion unter Verwendung der ermittelten Regelgröße und des Werts der Eingangs-Gleichspannung berechnet.

Gemäß einer weiteren Ausführungsform wird die Korrekturfunktion dann berechnet, wenn eine vorgegebene Freigabebedingung erfüllt ist. Die Freigabebedingung kann dabei Parameter wie den Betriebsmodus des Gleichspannungswandlers, einen Wertebereich des Eingangsstroms in dem Gleichspannungswandler, eine Auswertung der Zwischenkreisspannung in dem Gleichspannungswandler, eine Auswertung der Ausgangsspannung des Gleichspannungswandlers und/oder einen Vergleich der Regelgröße mit einem vorbestimmten Schwellwert berücksichtigen.

Gemäß einer weiteren Ausführungsform wird der Reglerwert unter Verwendung eines Werts des Eingangsstroms in den Gleichspannungs-Wandler berechnet. Durch die Berücksichtigung des Eingangsstroms in den Gleichspannungs-Wandler können insbesondere auch parasitäre Effekte, wie zum Beispiel Spannungsabfälle über Leitungen oder Bauelementen, etc. mit berücksichtigt werden.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der Erfindung hinzufügen.

### Kurze Beschreibung der Zeichnungen

Die vorliegende Erfindung wird nachfolgend anhand der in den schematischen Figuren der Zeichnungen angegebenen Ausführungsbeispielen näher erläutert. Dabei zeigen:
- Figur 1:: eine schematische Darstellung eines Gleichspannungs-Konverters gemäß einem Ausführungsbeispiel;
- Figur 2:: eine schematische Darstellung eines Diagramms zur Ermittlung einer Freigabebedingung, wie es einem Gleichspannungs-Konverters gemäß einem Ausführungsbeispiel zugrunde liegt; und
- Figur 3:: ein Ablaufdiagramm für ein Verfahren zur Regelung eines Gleichspannungs-Konverters, wie es einem Ausführungsbeispiel zugrunde liegt.

### Ausführungsformen der Erfindung

In allen Figuren sind gleiche bzw. funktionsgleiche Elemente und Vorrichtungen, soweit nicht anders angegeben, mit gleichen Bezugszeichen versehen.

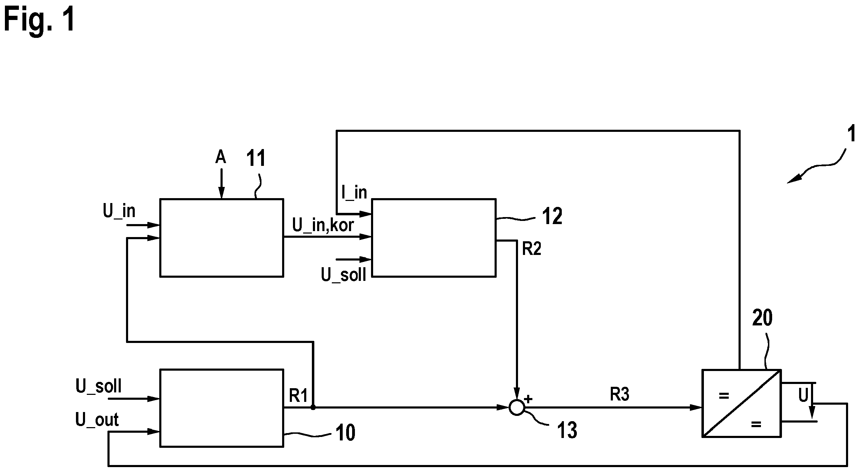

Figur 1 zeigt eine schematische Darstellung eines Blockschaltbilds eines Gleichspannungs-Konverters 1 gemäß einer Ausführungsform. Die Konvertierung der Eingangs-Gleichspannung in die Ausgangs-Gleichspannung erfolgt dabei in dem Gleichspannungs-Wandler 20. Um für die Ausgangsspannung des Gleichspannungs-Konverters 1 eine konstante Ausgangs-Gleichspannung mit einer vorgegebenen Spannungshöhe zu erzielen, erfolgt dabei eine Spannungsregelung. Die Spannungsregelung umfasst dabei eine Vorsteuerung basierend auf dem Wert der Eingangs-Gleichspannung U_in mittels der Korrektureinrichtung 11 sowie der Regeleinrichtung 12, und einer Spannungsregelung mittels der Vergleichseinrichtung 10. Die Regelgrößen der Vergleichseinrichtung 10 und der Vorsteuerung werden in der Recheneinrichtung 13 miteinander kombiniert und als Reglerwert R3 dem Gleichspannungs-Wandler 20 zugeführt.

Der Gleichspannungs-Wandler 20 empfängt den Reglerwert R3, der sich aus Kombination der Regelgröße R1 der Vergleichseinrichtung 10 mit der weiteren, zweiten Regelgröße R2 der Vorsteuerung ergibt. Basierend auf dem empfangenen Reglerwert R3 erfolgt in dem Gleichspannungs-Wandler 20 eine Anpassung des Betriebspunktes. Beispielsweise kann in Abhängigkeit von dem empfangenen Reglerwert R3 ein Tastverhältnis zur Ansteuerung von Schaltelementen in dem Gleichspannungs-Wandler 20 angepasst werden. Darüber hinaus sind beliebige, geeignete weitere Maßnahmen zur Anpassung eines Arbeitspunktes möglich, um die Ausgangsspannung U_out des Gleichspannungswandlers 20 in Abhängigkeit von dem empfangenen Reglerwert R3 anzupassen.

Bei dem Gleichspannungs-Wandler 20 kann es sich dabei um einen beliebigen Gleichspannungs-Wandler handeln, dessen Ausgangsspannung in Abhängigkeit von einem Reglerwert R3 anpassbar ist. Insbesondere kann es sich bei dem Gleichspannungs-Wandler 20 beispielsweise um einen Tiefsetzsteller handeln, der eine Eingangs-Gleichspannung U_in in eine niedrigere Ausgangs-Gleichspannung U_out konvertiert. Aber auch Hochsetzsteller, oder kombinierte Hoch-Tiefsetzsteller sind möglich. Insbesondere kann der Gleichspannungs-Wandler 20 beispielsweise eine Kombination aus einem Wechselrichter, einem Transformator und einem nachgeschalteten Gleichrichter umfassen. Dabei kann die Ansteuerung der Schaltelemente des Wechselrichters eines solchen Gleichspannungswandlers und/oder eine Ansteuerung von Schaltelementen eines aktiven Gleichrichters in einem Gleichspannungs-Wandler in Abhängigkeit von einem empfangenen Reglerwert angepasst werden. Beliebige weitere Schaltungskonfigurationen für einen Gleichspannungs-Wandler sind darüber hinaus ebenso möglich.

Der Gleichspannungs-Wandler 20 soll dabei möglichst auch bei einer schwankenden Eingangsspannung U_in eine möglichst konstante Ausgangs-Gleichspannung U_out ausgeben. Dabei kann der vorgegebene Soll-Spannungswert U_soll für die Ausgangs-Gleichspannung U_out fest vorgegeben sein. Alternativ ist es jedoch auch möglich, dass der Soll-Spannungswert U_soll für die Ausgangs-Gleichspannung U_out anpassbar ist.

Für eine Regelung der Ausgangsspannung U_out wird der Wert der Ausgangs-Gleichspannung U_out der Vergleichseinrichtung 10 zugeführt und in der Vergleichseinrichtung 10 wird der Wert der Ausgangs-Gleichspannung U_out mit dem vorgegebenen Soll-Spannungswert U_soll verglichen. In Abhängigkeit von dem Vergleich zwischen Wert der Ausgangs-Gleichspannung U_out und Soll-Spannungswert U_soll bestimmt die Vergleichseinrichtung 10 eine erste Regelgröße R1 und stellt diese am Ausgang der Vergleichseinrichtung 10 bereit.

Die Regeleinrichtung 12 generiert darüber hinaus eine zweite Regelgröße R2. Für die Generierung der zweiten Regelgröße R2 vergleicht die Regeleinrichtung 12 dabei den vorgegebenen Soll-Spannungswert U_soll für die Ausgangs-Gleichspannung mit einem Wert, der zu der Eingangs-Gleichspannung U_in korrespondiert. Auf diese Weise kann die Regeleinrichtung 12 eine zweite Regelgröße R2 generieren, die Schwankungen in der Eingangs-Gleichspannung U_in berücksichtigt. In der Recheneinrichtung 13 werden daraufhin die erste Regelgröße R1 der Vergleichseinrichtung 10 und die zweite Regelgröße R2 der Regeleinrichtung 12 miteinander kombiniert. Beispielsweise können dabei analoge oder digitale Signale der ersten und zweiten Regelgröße R1 und R2 addiert oder überlagert werden. Aus der Kombination der ersten Regelgröße R1 und der zweiten Regelgröße R2 generiert die Recheneinrichtung 13 somit einen Reglerwert R3, der zur Steuerung des Betriebs des Gleichspannungs-Wandlers 20 und insbesondere zur Anpassung der Ausgangs-Gleichspannung U_out des Gleichspannungs-Wandlers 20 verwendet wird.

Systembedingt kann es dabei gegebenenfalls bei der Erfassung der Eingangs-Gleichspannung U_in zu Fehlern kommen. Beispielsweise kann ein zur Erfassung des Werts der Eingangs-Gleichspannung U_in verwendeter Spannungssensor falsch kalibriert sein, oder aufgrund von Temperatureinflüssen oder einer Alterung ungenaue Messwerte liefern. Auch weitere Einflüsse, die zu falschen bzw. ungenauen Werten der Eingangs-Gleichspannung U_in führen, sind selbstverständlich möglich. In diesem Fall würde die Regeleinrichtung 12 als zweite Regelgröße R2 eine Regelgröße liefern, die den Gleichspannungs-Wandler 20 dazu veranlassen würde, eine Ausgangs-Gleichspannung U_out auszugeben, deren Wert von dem vorgegebenen Soll-Spannungswert U_soll abweicht. Um diese Abweichung zu kompensieren, müsste die Vergleichseinrichtung 10 kontinuierlich eine erste Regelgröße R1 generieren, die dieser Abweichung entgegenwirkt. Die Kombination der ersten Regelgröße R1 und der zweiten Regelgröße R2 in der Recheneinrichtung 13 führt auch in diesem Fall dazu, dass der Gleichspannungs-Wandler 20 eine Ausgangs-Gleichspannung U_out in der vorgegebenen Spannungshöhe liefert.

Um jedoch zu vermeiden, dass die Vergleichseinrichtung 10 auch in einem stationären Betrieb, insbesondere bei konstanter Eingangs-Gleichspannung U_in, in das Regelgeschehen eingreifen muss, erfolgt in der Korrektureinrichtung 11 eine Anpassung des Werts der Eingangs-Gleichspannung U_in. Hierzu empfängt die Korrektureinrichtung 11 einen Wert der Eingangs-Gleichspannung U_in des Gleichspannungs-Konverters 1. Beispielsweise kann dieser Wert der Eingangs-Gleichspannung U_in von einem Spannungssensor oder ähnlichem erfasst worden sein. Basierend auf einer zuvor bestimmten Korrekturfunktion wird in der Korrektureinrichtung 11 der Wert der Eingangs-Gleichspannung U_in angepasst und dieser angepasste Wert U_in,kor wird daraufhin als ein Eingangsparameter der Regeleinrichtung 12 bereitgestellt. Für die Korrekturfunktion zur Anpassung des Werts der Eingangs-Gleichspannung U_in sind dabei beliebige geeignete Funktionen möglich. In einem einfachsten Fall kann beispielsweise ein konstantes Offset zu dem Wert der Eingangs-Gleichspannung U_in hinzuaddiert oder subtrahiert werden. Zusätzlich oder alternativ ist auch eine Multiplikation mit einem geeigneten Korrekturfaktor möglich. Darüber hinaus ist auch die Ermittlung von komplexeren Korrekturfunktionen für die Anpassung des Werts der Eingangs-Gleichspannung U_in möglich. Ein Beispiel für die Ermittlung einer Korrekturfunktion zur Anpassung des Werts der Eingangs-Gleichspannung U_in wird im Nachfolgenden noch näher beschrieben.

Die Korrektureinrichtung 11 ermittelt somit aus dem angepassten Wert U_in,kor der Eingangs-Gleichspannung und dem vorgegebenen Soll-Spannungswert U_soll die zweite Regelgröße R2, die als eine Komponente in die Berechnung des Reglerwerts R3 zur Steuerung des Gleichspannungs-Wandlers 20 einfließt. Ziel dabei ist es, im stationären Betrieb, das heißt bei konstanter Eingangs-Gleichspannung U_in und statischen Betriebsbedingungen, eine Ausgangs-Gleichspannung U_out zu erzielen, die möglichst kein Eingreifen der Vergleichseinrichtung 10 mittels der ersten Reglergröße R1 erfordert. Gegebenenfalls kann hierzu neben dem korrigierten Wert U_in,kor der Eingangs-Gleichspannung auch noch ein Wert des elektrischen Stroms I_in, der in den Gleichspannungs-Wandler 20 fließt, bei der Bestimmung der zweiten Regelgröße R2 durch die Regeleinrichtung 12 mit einfließen. Durch die Berücksichtigung des Eingangsstroms I_in können dabei beispielsweise schwankende Spannungsabfälle über Leitungen bzw. Bauteilen mit berücksichtigt werden.

Zur Anpassung bzw. Bestimmung der Korrekturfunktion in der Korrektureinrichtung 11 kann beispielsweise die erste Regelgröße R1, die von der Vergleichseinrichtung 10 generiert wurde, herangezogen werden. Wird in einem stationären Betrieb durch die Vergleichseinrichtung 10 eine erste Regelgröße R1 generiert, die aus einer Differenz Zwischenwert der Ausgangs-Gleichspannung U_out und Soll-Spannungswert U_soll herrührt, so ist die zweite Regelgröße R2 der Regeleinrichtung 12 nicht optimal eingestellt. Dies kann unter anderem aus einer falschen Anpassung des Werts U_in,kor der Eingangs-Gleichspannung in der Korrektureinrichtung 11 herrühren. Wird in einem stationären Betrieb durch die Korrektureinrichtung 11 eine solche erste Regelgröße R1 detektiert, so kann die Korrekturfunktion in der Korrektureinrichtung 11 entsprechend angepasst werden. Insbesondere kann die Korrektur des Werts der Eingangs-Gleichspannung U_in derart angepasst werden, dass die erste Regelgröße R1 der Vergleichseinrichtung 10 im stationären Betrieb zu Null wird. Die Korrektureinrichtung 10 kann hierzu beispielsweise ein Offset und/oder einen Korrekturfaktor unter Verwendung der ersten Regelgröße R1 anpassen. Nach Abschluss der Anpassung der Korrekturfunktion in der Korrektureinrichtung 11 erfolgt die Regelung der Ausgangsspannung des Gleichspannungs-Wandlers 20 möglichst ausschließlich über die zweite Regelgröße R2. Im stationären Betrieb sollte dabei die erste Regelgröße R1 der Vergleichseinrichtung 10 möglichst nahe dem Nullpunkt liegen.

Die Anpassung der Korrekturfunktion in der Korrektureinrichtung 11 erfolgt dabei jedoch nicht kontinuierlich, sondern nur unter zuvor festgelegten Rahmenbedingungen. Hierzu kann beispielsweise die Anpassung der Korrekturfunktion in der Korrektureinrichtung 11 nur dann erfolgen, wenn eine vorgegebene Freigabebedingung erfüllt ist. Beispielsweise kann an der Korrektureinrichtung 11 ein Aktivierungssignal A bereitgestellt werden. Nur wenn dieses Aktivierungssignal A aktiv ist (beispielsweise logisch 1), erfolgt eine Auswertung der ersten Regelgröße R1 zur Anpassung der Korrekturfunktion.

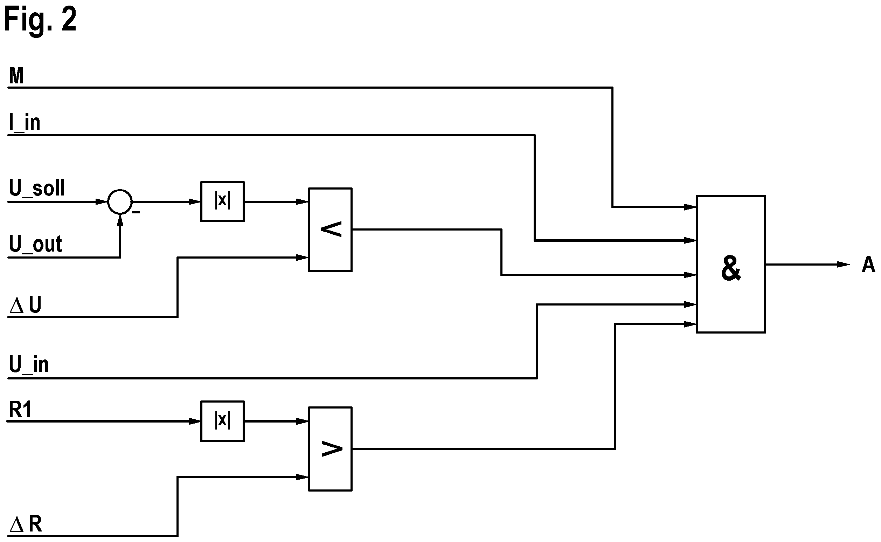

Figur 2 zeigt eine schematische Darstellung für die Generierung einer Freigabebedingung für die Anpassung der Korrekturfunktion gemäß einer Ausführungsform. Beispielsweise kann für die Bestimmung der Freigabebedingung ein Betriebsmodus M des Gleichspannungs-Wandlers 20 ausgewertet werden. Insbesondere kann die Aktivierung nur auf einen vorbestimmten Betriebsmodus M, wie zum Beispiel einen Tiefsetzstellerbetrieb, einen Hochsetzstellerbetrieb, etc. eingeschränkt werden.

Ferner kann auch der in den Spannungskonverter 1 fließende Gleichstrom I_in ausgewertet werden. Beispielsweise kann die Freigabe für die Anpassung der Korrekturfunktion auf einen zuvor bestimmten Wertebereich für den Eingangsstrom I_in begrenzt werden. Auf diese Weise kann beispielsweise sichergestellt werden, dass sich der Gleichspannungs-Wandlers 20 nicht in einem lückenden Betrieb befindet und somit keine linearen Rahmenbedingungen gegeben wären.

Weiterhin kann beispielsweise für die Bestimmung der Freigabebedingung A überprüft werden, ob sich das System in einem eingeschwungenen Zustand befindet. Weicht beispielsweise der Ausgangs-Gleichspannung U_out von dem vorgegebenen Soll-Spannungswert U_soll um mehr als einen vorbestimmten Schwellwert ΔU ab, so ist das System noch nicht ausgeregelt. In diesem Fall sollte keine Freigabe für eine Anpassung der Korrekturfunktion erfolgen.

Weiterhin kann auch überprüft werden, ob die Eingangsspannung U_in, die beispielsweise an einem Zwischenkreis des Gleichspannungs-Wandlers 20 anliegt, stabil ist.

Ferner ist es auch denkbar, die Anpassung der Korrekturfunktion erst dann auszuführen, wenn der Eingriff der ersten Regelgröße R1 der Vergleichseinrichtung 10 einen vorgegebenen Schwellwert ΔR überschreitet.

Selbstverständlich ist die Berechnung der Freigabebedingung nicht auf die zuvor bestimmten Bedingungen begrenzt. Es ist möglich, sämtliche zuvor bestimmten Rahmenbedingungen miteinander zu kombinieren, oder auch nur einen Teil der zuvor beschriebenen Rahmenbedingungen für eine Freigabebedingung A auszuwerten. Darüber hinaus können auch weitere Rahmenbedingungen als Parameter für die Bestimmung der Freigabebedingung A mit einbezogen werden.

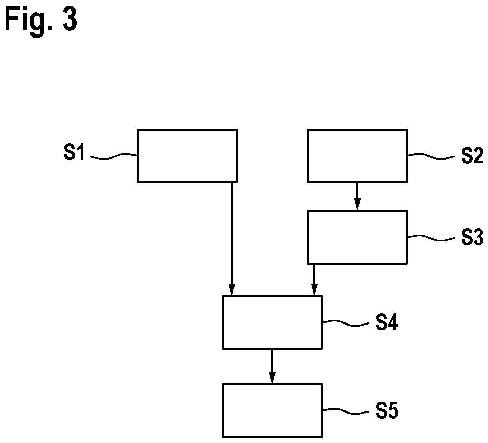

Figur 3 zeigt eine schematische Darstellung eines Ablaufdiagramms für ein Verfahren zur Regelung eines Gleichspannungs-Konverters. In Schritt S1 wird eine Regelgröße R1 basierend auf einem Vergleich des Werts einer Ausgangs-Gleichspannung U_out des Gleichspannungs-Wandlers 20 mit einem vorgegebenen Soll-Spannungswert U_soll für die Ausgangs-Gleichspannung U_out ermittelt. In Schritt S2 erfolgt eine Anpassung des Werts der Eingangs-Gleichspannung U_in des Gleichspannungs-Wandlers 20 basierend auf einer zuvor bestimmten Korrekturfunktion. In Schritt S3 wird eine weitere Regelgröße R2 unter Verwendung des Werts U_in,kor der angepassten Eingangs-Gleichspannung und dem vorgegebenen Soll-Spannungswert U_soll für die Ausgangs-Gleichspannung U_out berechnet. In Schritt S4 werden die ermittelte Regelgröße R1 und die berechnete weitere Regelgröße R2 zu einem Reglerwert R3 kombiniert. Schließlich erfolgt in Schritt S5 die Ansteuerung des Gleichspannungs-Wandlers 20 basierend auf dem Reglerwert R3.

Zusammenfassend betrifft die vorliegende Erfindung die Regelung der Ausgangsspannung eines Gleichspannungs-Konverters. Die dem Regler des Gleichspannungs-Konverters bereitgestellte Regelgröße setzt sich dabei aus einer Regelgröße eines Spannungsreglers und einer weiteren Regelgröße einer Vorsteuerung zusammen. Die Regelgröße des Spannungsreglers ergibt sich dabei direkt aus dem Vergleich der Ausgangsspannung mit einer Soll-Spannung. Die Regelgröße der Vorsteuerung berücksichtigt unter anderem die Eingangsspannung des Gleichspannungs-Konverters, wobei der Wert der Eingangs-Gleichspannung derart korrigiert werden kann, dass der Spannungsregler im stationären Betrieb nahe dem Nullpunkt betrieben werden kann. Auf diese Weise ergibt sich eine schnellere und präzisere Regelung der Ausgangsspannung.

## Patentansprüche

1. Gleichspannungs-Konverter (1) zur Konvertierung einer Eingangs-Gleichspannung (U_in) in eine vorbestimmte Ausgangs-Gleichspannung (U_out), mit:
einem Gleichspannungs-Wandler (20), der dazu ausgelegt ist, eine Eingangs-Gleichspannung (U_in) in die Ausgangs-Gleichspannung (U_out) zu konvertieren, und
eine Vergleichseinrichtung (10), die dazu ausgelegt ist, basierend auf einem Vergleich eines Werts der Ausgangs-Gleichspannung (U_soll) des Gleichspannungs-Konverters (1) mit einem vorgegebenen Soll-Spannungswert (U_soll) für die Ausgangs-Gleichspannung (U_out) eine Regelgröße (R1) bereitzustellen;
**gekennzeichnet durch**
eine Korrektureinrichtung (11), die dazu ausgelegt ist, einen Wert der Eingangs-Gleichspannung (U_in) des Gleichspannungs-Konverters (1) basierend auf einer zuvor bestimmten Korrekturfunktion anzupassen, und den Wert (U_in,kor) der angepassten Eingangs-Gleichspannung auszugeben,
wobei die Korrektureinrichtung (11) ferner dazu ausgelegt ist, die erste Regelgröße (R1) zu empfangen und die Korrekturfunktion anzupassen, wenn in einem stationären Betrieb die erste Regelgröße (R1) detektiert wird;
eine Regeleinrichtung (12), die dazu ausgelegt ist, den Wert (U_in,kor) der angepassten Eingangs-Gleichspannung und dem vorgegebenen Soll-Spannungswert (U_soll) für die Ausgangs-Gleichspannung (U_out) miteinander zu vergleichen und hieraus eine weitere Regelgröße (R2) zu berechnen; und
eine Recheneinrichtung (13), die dazu ausgelegt ist, aus der Regelgröße (R1) der Vergleichseinrichtung (10) und der weiteren Regelgröße (R2) der Regeleinrichtung (12) einen Reglerwert (R3) zu berechnen;
wobei der Gleichspannungs-Wandler (20), dazu ausgelegt ist, die Eingangs-Gleichspannung (U_in) basierend auf dem von der Recheneinrichtung (13) berechneten Reglerwert (R3) in die Ausgangs-Gleichspannung (U_out) zu konvertieren.

2. Gleichspannungs-Konverter (1) nach Anspruch 1, wobei die Korrektureinrichtung (11) dazu ausgelegt ist, die Korrekturfunktion anzupassen, wenn eine vorgegebene Freigabebedingung (A) erfüllt ist.

3. Verfahren zur Regelung eines Gleichspannungs-Konverters (1), mit den Schritten:
Ermitteln (S1) einer Regelgröße (R1) basierend auf einem Vergleich des Werts einer Ausgangs-Gleichspannung (U_in) des Gleichspannungs-Konverters (1) mit einem vorgegebenen Soll-Spannungswert (U_soll) für die Ausgangs-Gleichspannung;
**gekennzeichnet, durch**
Anpassen (S2) eines Werts (U_in,kor) einer Eingangs-Gleichspannung des Gleichspannungs-Konverters (1) basierend auf einer zuvor bestimmten Korrekturfunktion;
Anpassen der Korrekturfunktion, wenn in einem stationären Betrieb die erste Regelgröße (R1) detektiert wird;
Berechnen (S3) einer weiteren Regelgröße (R2), umfassend Vergleichen des Werts der angepassten Eingangs-Gleichspannung (U_in) und der vorgegebenen Soll-Spannungswert (U_soll) für die Ausgangs-Gleichspannung (U_out);
Kombinieren (S4) der ermittelten Regelgröße (R1) und der berechneten weiteren Regelgröße (R2) zu einem Reglerwert (S3); und
Steuern (S5) der Ausgangs-Gleichspannung (U_out) eines Gleichspannungs-Wandlers (20) des Gleichspannungs-Konverters (1) basierend auf dem Reglerwert (R3).

4. Verfahren nach Anspruch 3, wobei die Korrekturfunktion berechnet wird, wenn eine vorgegebene Freigabebedingung (A) erfüllt ist.

5. Verfahren nach Anspruch 4, wobei die vorgegebene Freigabebedingung (A) mindestens eine der folgenden Bedingungen umfasst:
einen vorbestimmten Betriebsmodus (M) des Gleichspannungs-Wandlers (20),
einen Eingangsstrom (I_in) in den Gleichspannungs-Wandler (20),
eine Auswertung einer Eingangsspannung (U_in) des Gleichspannungs-Wandlers (20),
eine Auswertung der Ausgangs-Gleichspannung (U_out) des Gleichspannungs-Wandlers (20),oder
einen Vergleich der Regelgröße (R1) mit einem vorgegebenen Schwellwert.

6. Verfahren nach einem der Ansprüche 3 bis 5, wobei das Berechnen der weiteren Regelgröße (R2), die weitere Regelgröße (R2) basierend auf einem Wert des Eingangsstroms (I_in) in den Gleichspannung-Wandler (1) berechnet.

## Claims

1. DC-DC voltage converter (1) for converting an input DC voltage (U_in) into a predetermined output DC voltage (U_out), comprising:
a DC-DC converter (20) which is designed to convert an input DC voltage (U_in) into the output DC voltage (U_out), and
a comparison means (10) which is designed to provide a controlled variable (R1), based on a comparison of a value of the output DC voltage (U_out) of the DC-DC voltage converter (1) with a predetermined setpoint voltage value (U_setpoint) for the output DC voltage (U_out);
**characterized by**
a correction means (11) which is designed to adjust a value of the input DC voltage (U_in) of the DC-DC voltage converter (1), based on a previously determined correction function, and to output the value (U_in,cor) of the adjusted input DC voltage;
wherein the correction means (11) is furthermore designed to receive the first controlled variable (R1) and to adjust the correction function if the first controlled variable (R1) is detected in a stationary mode;
a regulating means (12) which is designed to compare the value (U_in,cor) of the adjusted input DC voltage and the predetermined setpoint voltage value (U_setpoint) for the output DC voltage (U_out) with one another and to calculate an additional controlled variable (R2) therefrom; and
a calculating means (13) which is designed to calculate a regulator value (R3) from the controlled variable (R1) of the comparison means (10) and the additional controlled variable (R2) of the regulating means (12);
wherein the DC-DC converter (20) is designed to convert the input DC voltage (U_in) into the output DC voltage (U_out) based on the regulator value (R3) calculated by the calculating means (13).

2. DC-DC voltage converter (1) according to Claim 1, wherein the correction means (11) is designed to adjust the correction function if a predetermined enabling condition (A) has been met.

3. Method for regulating a DC-DC voltage converter (1), comprising the steps of:
ascertaining (S1) a controlled variable (R1), based on a comparison of the value of an output DC voltage (U_out) of the DC-DC voltage converter (1) with a predetermined setpoint voltage value (U_setpoint) for the output DC voltage;
**characterized by**
adjusting (S2) a value (U_in,cor) of an input DC voltage of the DC-DC voltage converter (1), based on a previously determined correction function;
adjusting the correction function if the first controlled variable (R1) is detected in a stationary mode;
calculating (S3) an additional controlled variable (R2), comprising comparing the value of the adjusted input DC voltage (U_in) and the predetermined setpoint voltage value (U_setpoint) for the output DC voltage (U_out);
combining (S4) the ascertained controlled variable (R1) and the calculated additional controlled variable (R2) into a regulator value (S3); and
controlling (S5) the output DC voltage (U_out) of a DC-DC converter (20) of the DC-DC voltage converter (1), based on the regulator value (R3).

4. Method according to Claim 3, wherein the correction function is calculated if a predetermined enabling condition (A) has been met.

5. Method according to Claim 4, wherein the predetermined enabling condition (A) comprises at least one of the following conditions:
a predetermined operating mode (M) of the DC-DC converter (20),
an input current (I_in) into the DC-DC converter (20),
an evaluation of an input voltage (U_in) of the DC-DC converter (20),
an evaluation of the output DC voltage (U_out) of the DC-DC converter (20), or
a comparison of the controlled variable (R1) with a predetermined threshold value.

6. Method according to one of Claims 3 to 5, wherein the calculation of the additional controlled variable (R2) furthermore calculates the additional controlled variable (R2) based on a value of the input current (I_in) into the DC-DC voltage converter (1).

## Revendications

1. Convertisseur de tension continue (1) destiné à convertir une tension continue d'entrée (U_in) en une tension continue de sortie prédéterminée (U_out), comprenant :
un transformateur continu-continu (20) qui est conçu pour convertir une tension continue d'entrée (U_in) en la tension continue de sortie (U_out), et
un dispositif de comparaison (10) qui est conçu pour fournir une grandeur de régulation (R1) sur la base d'une comparaison d'une valeur de la tension continue de sortie (U_out) du convertisseur continu-continu (1) à une valeur de tension de consigne prédéterminée (U_soll) pour la tension continue de sortie (U_out) ;
**caractérisé par**
un dispositif de correction (11) qui est conçu pour ajuster une valeur de la tension continue d'entrée (U_in) du convertisseur continu-continu (1) sur la base d'une fonction de correction prédéterminée, et pour délivrer la valeur (U_in,kor) de la tension continue d'entrée ajustée,
dans lequel le dispositif de correction (11) est en outre conçu pour recevoir la première grandeur de régulation (R1) et pour ajuster la fonction de correction lorsque la première grandeur de régulation (R1) est détectée au cours d'un fonctionnement en régime permanent ;
un dispositif de régulation (12) qui est conçu pour comparer l'une à l'autre la valeur (U_in,kor) de la tension continue d'entrée ajustée et la valeur de tension de consigne prédéterminée (U_soll) pour la tension continue de sortie (U_out) et pour calculer à partir de celle-ci une autre grandeur de régulation (R2) ; et
un dispositif de calcul (13) qui est conçu pour calculer une valeur de régulation (R3) à partir de la grandeur de régulation (R1) du dispositif de comparaison (10) et de l'autre grandeur de régulation (R2) du dispositif de régulation (12) ;
dans lequel le transformateur de tension continue (20) est conçu pour convertir la tension continue d'entrée (U_in) en la tension continue de sortie (U_out) sur la base de la valeur de régulation (R3) calculée par le dispositif de calcul (13).

2. Convertisseur de tension continue (1) selon la revendication 1, dans lequel le dispositif de correction (11) est conçu pour ajuster la fonction de correction lorsqu'une condition de déclenchement prédéterminée (A) est remplie.

3. Procédé de régulation d'un convertisseur de tension continue (1), comprenant les étapes suivantes :
la détermination (S1) d'une grandeur de régulation (R1) sur la base d'une comparaison de la valeur d'une tension continue de sortie (U_out) du convertisseur de tension continue (1) à une valeur de tension de consigne prédéterminée (U_soll) pour la tension continue de sortie ;
**caractérisé par**
l'ajustement (S2) d'une valeur (U_in,kor) d'une tension continue d'entrée du convertisseur de tension continue (1) sur la base d'une fonction de correction prédéterminée ;
l'ajustement de la fonction de correction lorsque la première grandeur de régulation (R1) est détectée au cours d'un fonctionnement en régime permanent ;
le calcul (S3) d'une autre grandeur de régulation (R2), cela comprenant la comparaison de la valeur de la tension continue d'entrée ajustée (U_in) à la valeur de tension de consigne prédéterminée (U_soll) pour la tension continue de sortie (U_out) ;
la combinaison (S4) de la grandeur de régulation déterminée (R1) et de l'autre grandeur de régulation calculée (R2) en une valeur de régulation (S3) ; et
la commande (S5) de la tension continue de sortie (U_out) d'un transformateur de tension continue (20) du convertisseur de tension continue (1) sur la base de la valeur de régulation (R3).

4. Procédé selon la revendication 3, dans lequel la fonction de correction est calculée lorsqu'une condition de déclenchement prédéterminée (A) est remplie.

5. Procédé selon la revendication 4, dans lequel la condition de déclenchement prédéterminée (A) comprend au moins l'une des conditions suivantes :
un mode de fonctionnement prédéterminé (M) du transformateur de tension continue (20),
un courant d'entrée (I_in) du transformateur de tension continue (20),
une évaluation d'une tension d'entrée (U_in) du transformateur de tension continue (20),
une évaluation de la tension continue de sortie (U_out) du transformateur de tension continue (20), ou
une comparaison de la grandeur de régulation (R1) à une valeur de seuil prédéterminée.

6. Procédé selon l'une des revendications 3 à 5, dans lequel le calcul de l'autre grandeur de régulation (R2) calcule l'autre grandeur de régulation (R2) sur la base d'une valeur du courant d'entrée (I_in) dans le transformateur de tension continue (1).
